# DEMANDE DE BREVET EUROPEEN

(11) **EP 4 184 121 A1**
(43) Date de publication de la demande: **24.05.2023**
(21) Numéro de dépôt: 22200395.6
(22) Date de dépôt: 07.10.2022
(51) Int. Cl.: G01C 23/00, B64D 43/00

(54) **SYSTEME DE VISUALISATION MULTIFONCTION D'UN AERONEF, AERONEF ET PROCEDE DE VISUALISATION ASSOCIE**

(30) Priorité: 22.11.2021 FR 2112308
(71) Demandeur: Airbus Helicopters, 13725 Marignane Cedex (FR)
(72) Inventeur: POVEDA, Stéphane, 13410 LAMBESC (FR)
(74) Mandataire: GPI Brevets

(57) **Abrégé**

La présente invention concerne un système (10) de visualisation multifonction bipilote et un aéronef (11) équipé dudit système (10), le système (10) comportant :
• au moins trois écrans (1, 2, 3), au moins deux desdits au moins trois écrans (1, 2, 3) étant apte à afficher une page de symbologies dite « page FND » comportant des symboles (5) et des informations (6) prédéterminés se rapportant au vol et à la navigation de l'aéronef (11), et
• des détecteurs (7) pour détecter au moins un écran (1, 2, 3) en panne parmi lesdits au moins trois écrans (1, 2, 3),

## Description

La présente invention se rapporte au domaine de la visualisation multifonction d'un aéronef embarquant un équipage d'au moins deux pilotes. Un tel aéronef peut être notamment un avion ou un giravion tel que par exemple un hélicoptère comportant au moins un rotor de sustentation, voire également au moins une hélice pour participer à la propulsion.

L'aéronef peut avoir à disposition des deux pilotes les mêmes commandes de pilotage ou bien des commandes distinctes. L'un des pilotes peut piloter l'aéronef à l'aide de ses commandes et l'autre pilote peut avoir un rôle de copilote. Les rôles du pilote et du copilote peuvent en outre être inversés en vol lors d'une mission de l'aéronef.

Par la suite, l'un et l'autre des deux pilotes peuvent être indifféremment désignés comme pilote et copilote de l'aéronef et, pour faciliter la compréhension de la demande, seront désignés par la suite premier pilote et second pilote.

En outre, un système de visualisation embarqué dans l'aéronef permet de communiquer aux deux pilotes des données diverses. Ces données peuvent comprendre des données de vol et d'aide à la navigation pour par exemple faciliter le pilotage de l'aéronef et pour permettre notamment aux pilotes de suivre un cap, de maintenir l'aéronef à une altitude prédéterminée....

Un tel système de visualisation comporte une pluralité d'écrans, et par exemple au moins quatre écrans dont au moins trois peuvent être agencés sur une planche de bord, pour afficher simultanément plusieurs pages de symbologies utiles pour le pilotage de cet aéronef.

Par exemple, les pages généralement affichées sur les écrans peuvent être choisies par chaque pilote en fonction des préférences du pilote ou de ses besoins pour piloter l'aéronef ou, lorsqu'il s'agit du copilote, pour aider le pilote.

Ces pages peuvent notamment comporter une page dite « FND » correspondant à l'acronyme de l'expression en langue anglaise << Flight Navigation Display >>, une page dite « ND » correspondant à l'acronyme de l'expression en langue anglaise « Navigation Display », une page dite « VMS » correspondant à l'acronyme de l'expression en langue anglaise << Vehicle Management System >>, une page dite << DMAP >> correspondant à l'acronyme de l'expression en langue anglaise << Digital MAP >>, une page << MISSION >>.

Une telle page Flight Navigation Display comporte des symboles et des informations représentatifs par exemple d'un cap et d'une altitude.

Contrairement à la page Navigation Display, la page Flight Navigation Display présente toutes les informations primaires utiles au pilotage telles que l'attitude de l'aéronef, la vitesse de l'aéronef, le dérapage de l'aéronef, la hauteur de l'aéronef, la puissance motrice et à la navigation tel qu'un plan de vol. Dans un mode de fonctionnement nominal, une telle page au format FND peut être affichée devant le pilote aux commandes de l'aéronef.

Une telle page FND est notamment connue et utilisée dans les systèmes d'affichage pour aéronefs équipés de la suite avionique Helionix^{®}. Un exemple d'une telle page FND est également décrit plus en détail dans une video de présentation nommée << Walkthrough of the Helionix Avionics System in the Airbus Helicopters H135 Twin - AINtv >>, consultable par exemple à l'adresse internet suivante : https://www.youtube.com/watch?v=a9ExJCnLDJw.

En outre, la page FND se distingue d'une page PFD, acronyme anglais pour l'expression anglaise « Primary Flight Display », ou d'une page MFD, acronyme anglais pour l'expression anglaise << Multifunction Flight Display >> en ce qu'elle comporte des informations utiles à la navigation tel qu'un plan de vol.

De même une page FND se distingue d'une page ND en ce qu'elle comporte des informations utiles au pilotage telles que l'attitude de l'aéronef, la vitesse de l'aéronef, le dérapage de l'aéronef, la hauteur de l'aéronef, la puissance motrice.

En outre, le document FR 2 892 092 divulgue un système d'affichage comportant des moyens de reconfiguration automatique pour, lors de la détection d'une panne d'un écran du système, afficher l'image qui est associée à l'écran en panne, sur un écran valide dont l'image associée présente une priorité moindre selon des règles de priorité.

Ce document décrit notamment l'affichage de pages Navigation Display sur les écrans du système.

Le document US 6842672 concerne quant à lui des systèmes de tableau de bord de cockpit et des procédés de présentation de données sur des instruments de cockpit. En particulier, ce document concerne des procédés avec affichage redondant de données de vol.

Un tel tableau de bord présente deux écrans avec un mode d'affichage de secours permettant de réaliser un affichage des informations essentielles au pilotage sur un écran en cas de panne de l'autre écran.

Le document EP 3686732 porte sur la reconfiguration d'un système d'affichage en mode mono-pilote.

Le document US20130076540A1 décrit une unité de contrôle et d'affichage avionique multi-produits CDU. Cette unité CDU peut comprendre par exemple trois écrans : deux écrans primaires (102(1), 102(2)) << Primary Flight Displays >> (PFD) et un écran central multifonction (104) << Multifunction Flight Display >> (MFD).

Il décrit également que les pages PFD peuvent être affichées sur l'écran PFD 102(1), sur l'écran PFD 102(2), ou encore sur l'écran MFD 104 si les si les informations primaires de vol reçues de l'AHRS 110 et de l'ADC 112 sont erronées ou indisponibles.

Des commutateurs réversibles 118 peuvent être sélectionnés manuellement par le pilote pour configurer les écrans PFD 102 ou l'écran MFD 104 pour afficher les pages PFD à partir soit du premier AHRS 110(1) et ADC 112(1) soit du deuxième AHRS 110(2) et ADC(2). L'un ou les deux des écrans PFD 102 peuvent également être configurés pour afficher des informations affichées sur l'écran MFD 104, telles que les jauges du moteur et les informations de navigation, par exemple en cas de panne de l'écran MFD 104.

Le document US6985801B1 se rapporte quant à lui des systèmes et des procédés de tableau de bord de cockpit avec un affichage redondant de données de vol. Par suite, ces systèmes comportent au moins deux écrans multifonction (MFD) 420, 460.

En outre lorsque l'un des écran MFD (420 ou 460) tombe en panne, l'écran MFD restant fonctionnel (420 ou 460) s'adapte ou s'ajuste automatiquement pour afficher toutes les données d'informations de vol, qui étaient précédemment présentées sur les deux écrans MFD.

La présente invention a alors pour objet de proposer un système de visualisation multifonction alternatif d'un aéronef embarquant deux pilotes et un procédé associé.

L'invention se rapporte donc à un système de visualisation multifonction bipilote comportant :
- au moins trois écrans, par exemple agencés sur une planche de bord d'un aéronef, au moins deux des au moins trois écrans étant aptes à afficher une page de symbologies dite << page FND >> comportant des symboles et des informations prédéterminés se rapportant au vol et à la navigation de l'aéronef, et
- des détecteurs pour détecter au moins un écran en panne parmi les au moins trois écrans.

Selon l'invention, un tel système est remarquable en ce que, hors cas de panne d'au moins un des au moins trois écrans, la page FND est affichée au moins sur un écran prioritaire parmi les au moins trois écrans sans possibilité pour un premier pilote et un second pilote d'effacer la page FND, et en ce que le système de visualisation comporte un contrôleur configuré pour, en cas de panne de l'écran prioritaire détectée par les détecteurs, afficher automatiquement la page FND sur un écran valide des au moins trois écrans sans possibilité pour le premier pilote et le second pilote d'effacer la page FND sur l'écran valide.

Autrement dit, un tel système de visualisation permet d'affecter à un écran prioritaire l'affichage de la page FND. Cette page FND ne peut pas être supprimée par l'équipage de cet écran considéré comme prioritaire.

Eventuellement, la page FND peut également être affichée sur d'autres écrans considérés quant à eux comme étant secondaires. Dans ce cas, une page FND affichée sur un écran secondaire peut être effacée par l'un des pilotes.

Les détecteurs permettent de détecter de manière usuelle un écran en panne, par exemple en détectant un problème d'alimentation électrique de l'écran prioritaire, un problème de capacité de calcul au niveau d'une unité centrale de traitement généralement désignée par l'expression en langue anglaise « Computing Processor Unit » et par son acronyme « CPU », un problème de génération graphique au niveau d'une unité graphique de traitement généralement désignée par l'expression en langue anglaise << Graphical Processor Unit >> et par son acronyme << GPU >>, un problème de blocage d'un ou plusieurs pixels de cet écran prioritaire ou bien encore un gel de la page affichée sur cet écran prioritaire. En effet, une page FND comporte généralement une pluralité d'images affichées successivement sur un écran. Un gel de la page FND peut alors correspondre au blocage des images affichées.

Au contraire, un écran est considéré comme valide si aucune anomalie n'est détectée par les détecteurs.

De tels détecteurs peuvent notamment comporter des senseurs mesurant au moins une grandeur physique telle une tension électrique ou un courant électrique et une unité de traitement permettant d'analyser cette grandeur physique, voire de la comparer avec au moins une valeur de seuil prédéterminée.

L'unité de traitement des détecteurs peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

En cas de panne détectée sur l'écran prioritaire affichant la page FND, le contrôleur identifie un écran valide parmi les autres écrans et bascule alors automatiquement l'affichage de la page FND sur cet écran valide.

Le système de visualisation permet alors d'affecter à cet écran valide l'affichage de la page FND avec les mêmes règles que sur l'écran prioritaire. En effet, la page FND ne peut être supprimée par l'équipage de cet écran valide.

Le contrôleur peut quant à lui comprendre par exemple au moins un processeur et au moins une mémoire, au moins un circuit intégré, au moins un système programmable, au moins un circuit logique, ces exemples ne limitant pas la portée donnée à l'expression « contrôleur ». Le terme processeur peut désigner aussi bien une unité centrale de traitement connue sous l'acronyme CPU, une unité graphique de traitement GPU, une unité digitale connue sous l'acronyme DSP, un microcontrôleur...

Par ailleurs, les écrans peuvent être connectés entre eux et/ou connectés individuellement avec les détecteurs par des liaisons filaires ou non filaires pour transmettre leur état valide ou en panne aux détecteurs. Dans ce cas, chaque écran peut comporter un senseur et une partie de l'unité de traitement des détecteurs pour analyser le signal en sortie de ce senseur. De cette manière les détecteurs peuvent être en tout ou partie agencés dans les écrans pour identifier l'état valide ou en panne de chaque écran.

Les écrans peuvent également être connectés individuellement avec le contrôleur par des liaisons filaires ou non filaires pour transmettre la page FND à afficher sur un écran valide et les règles d'affichage interdisant aux pilotes d'effacer cette page FND.

Un tel système de visualisation multifonction bipilote est particulièrement adapté pour les aéronefs comportant des commandes de vol mécaniques pour piloter des organes aérodynamiques tels le pas des pales d'un rotor et/ou des volets et/ou des gouvernes d'un empennage.

Le système de visualisation multifonction est en outre avantageux car il permet de réduire la charge de travail de l'équipage en affichant à tout instant la page FND sur un écran valide sans aucune action des pilotes. La sécurité de la mission de l'aéronef est ainsi améliorée.

En outre, le système de visualisation multifonction bipilote peut comprendre une ou plusieurs des caractéristiques qui suivent.

Avantageusement, les au moins trois écrans comprenant un écran droit agencé en regard du premier pilote, un écran gauche agencé en regard du second pilote et un écran central agencé entre le premier pilote et le second pilote, le premier pilote et le second pilote étant assis côte à côte dans un cockpit d'aéronef, l'écran prioritaire peut être choisi parmi le groupe comportant l'écran gauche et l'écran droit.

Par conséquent, l'écran prioritaire est l'un des écrans agencés en face de l'un des pilotes. La page FND est ainsi parfaitement visible par ce pilote lorsque le pilote regarde devant lui.

Selon une première variante de l'invention, l'écran prioritaire peut être l'écran droit.

Dans ce cas, l'écran droit affiche initialement la page FND, par exemple au décollage de l'aéronef et tant qu'il ne tombe pas en panne. En cas de panne détectée en vol sur cet écran droit, le contrôleur bascule automatiquement l'affichage de la page FND sur un écran restant valide tel que l'écran gauche ou l'écran central.

Une telle première variante est en outre mise en œuvre lorsque le premier pilote est de manière privilégiée le pilote effectivement aux commandes de l'aéronef et le second pilote est de manière privilégiée le copilote.

Selon une seconde variante de l'invention, l'écran prioritaire peut être l'écran gauche.

Dans ce cas, l'écran gauche affiche initialement la page FND, par exemple au décollage de l'aéronef et tant qu'il ne tombe en panne. En cas de panne détectée en vol sur cet écran gauche, le contrôleur bascule automatiquement l'affichage de la page FND sur un écran restant valide tel que l'écran droit ou l'écran central.

Une telle seconde variante est quant à elle mise en œuvre lorsque le premier pilote est de manière privilégiée le copilote et le second pilote est de manière privilégiée le pilote aux commandes de l'aéronef.

Selon un premier mode de fonctionnement de l'invention, hors cas de panne d'au moins un des au moins trois écrans, le système peut être configuré pour afficher la page FND sur la totalité de l'écran prioritaire et, en cas de panne de l'écran prioritaire détectée par les détecteurs, le contrôleur peut être configuré pour afficher la page FND sur la totalité de l'écran valide.

Autrement dit, la page FND peut s'afficher sur toute la surface de l'écran prioritaire puis, en cas de panne, sur toute la surface de l'écran valide.

Selon un second mode de fonctionnement de l'invention, hors cas de panne d'au moins un des au moins trois écrans, le système peut être configuré pour afficher la page FND sur une portion de l'écran prioritaire et, en cas de panne de l'écran prioritaire détectée par les détecteurs, le contrôleur peut être configuré pour afficher la page FND sur une partie de l'écran valide.

En d'autres termes selon une autre configuration du système, la page FND peut s'afficher avec au moins une autre page respectivement chacune sur une portion de la surface de l'écran prioritaire puis, en cas de panne, seule la page FND initialement affichée sur l'écran prioritaire peut être affichée sur une partie de la surface de l'écran valide.

L'écran valide peut alors également afficher sur une autre partie une page initialement affichée sur cet écran valide avant la panne de l'écran prioritaire.

De manière avantageuse, la portion de l'écran prioritaire et la partie de l'écran valide peuvent être des moitiés d'écran. Un tel second mode de fonctionnement permet ainsi aux pilotes de conserver la page initialement affichée sur l'écran valide en plus de la page FND nouvellement affichée.

Selon un premier exemple de réalisation du second mode de fonctionnement de l'invention, les au moins trois écrans comprenant un écran droit agencé en regard d'un premier pilote, un écran gauche agencé en regard d'un second pilote et un écran central agencé entre le premier pilote et le second pilote, le premier pilote et le second pilote étant assis côte à côte dans un cockpit d'aéronef, l'écran prioritaire étant l'écran droit, en cas de panne de l'écran prioritaire détectée par les détecteurs, le contrôleur peut être configuré pour afficher la page FND sur une partie droite de l'écran valide.

Ainsi, l'écran droit affiche initialement la page FND sur une portion de sa surface, par exemple au décollage de l'aéronef. En cas de panne détectée en vol sur cet écran droit, le contrôleur bascule automatiquement l'affichage de la page FND sur une partie droite de surface d'un écran restant valide tel que l'écran gauche ou l'écran central. Cet agencement permet ainsi de favoriser la vision de la page FND par le premier pilote positionné en face de l'écran droit.

Selon un second exemple de réalisation du second mode de fonctionnement de l'invention, les au moins trois écrans comprenant un écran droit agencé en regard d'un premier pilote, un écran gauche agencé en regard d'un second pilote et un écran central agencé entre le premier pilote et le second pilote, le premier pilote et le second pilote étant assis côte à côte dans un cockpit d'aéronef, l'écran prioritaire étant l'écran gauche, en cas de panne de l'écran prioritaire détectée par les détecteurs, le contrôleur peut être configuré pour afficher la page FND sur une partie gauche de l'écran valide.

Selon cet exemple, l'écran gauche affiche initialement la page FND sur une portion de sa surface, par exemple au décollage de l'aéronef. En cas de panne détectée en vol sur cet écran gauche, le contrôleur bascule automatiquement l'affichage de la page FND sur une partie gauche de surface d'un écran restant valide tel que l'écran droit ou l'écran central. Cet agencement permet ainsi de favoriser la vision de la page FND par le second pilote positionné en face de l'écran gauche.

La présente invention a aussi pour objet un aéronef comportant un cockpit apte à recevoir un premier pilote et un second pilote assis l'un à côté de l'autre de part et d'autre d'un plan antéropostérieur de l'aéronef.

Un tel aéronef peut être préférentiellement un giravion, un hélicoptère ou un hélicoptère hybride comportant notamment une aile participant à la sustentation et au moins une hélice propulsive ou tractive.

Selon l'invention, un tel aéronef est remarquable en ce qu'il comporte un système de visualisation multifonction bipilote précité.

Autrement dit, l'aéronef comporte des détecteurs et un contrôleur tels que précédemment décrits pour contrôler automatiquement l'affichage d'une page FND.

La présente invention a aussi pour objet un procédé de visualisation multifonction bipilote d'un aéronef comportant les étapes de:
- génération d'une page de symbologies dite << page FND >> comportant des symboles et des informations prédéterminés se rapportant au vol et à la navigation de l'aéronef, et
- surveillance d'au moins trois écrans pour détecter au moins un écran en panne parmi les au moins trois écrans.

Selon l'invention, un tel procédé est remarquable en ce que, hors cas de panne d'au moins un des au moins trois écrans, le procédé comporte un affichage de la page FND sur un écran prioritaire parmi les au moins trois écrans sans possibilité pour un premier pilote et un second pilote d'effacer la page FND, et en ce que, en cas de panne de l'écran prioritaire détectée lors de la surveillance, le procédé comporte une reconfiguration automatique avec un contrôleur pour afficher automatiquement la page FND sur un écran valide des au moins trois écrans sans possibilité pour le premier pilote et le second pilote d'effacer la page FND sur l'écran valide.

En d'autres termes, l'affichage de la page FND sur l'écran prioritaire interdit toute suppression de cette page par l'un ou l'autre des deux pilotes.

La surveillance est effectuée par des détecteurs tels que précédemment décrits qui identifient alors une panne de cet écran prioritaire mais permettent également de connaitre les écrans restant valides parmi les au moins trois autres écrans. Une telle surveillance permet donc de gagner du temps car il n'a alors pas besoin de rechercher les écrans restant valides lors de l'étape de reconfiguration automatique.

La reconfiguration automatique permet quant à elle, au moyen du contrôleur précédemment décrit, d'afficher cette page FND sur l'un des écrans restant valides avec les mêmes règles d'affichage initialement utilisées sur l'écran prioritaire, et plus précisément avec une interdiction pour les pilotes d'effacer cette page FND de l'écran valide.

L'invention et ses avantages apparaîtront avec plus de détails dans le cadre de la description qui suit avec des exemples donnés à titre illustratif en référence aux figures annexées qui représentent :
la figure 1, un schéma illustrant un système de visualisation multifonction bipilote conforme à l'invention,
la figure 2, une vue de coté d'un aéronef conforme à l'invention,
la figure 3, un logigramme représentatif d'un procédé de visualisation multifonction bipilote conforme à l'invention,
la figure 4, un schéma illustrant un premier mode de fonctionnement du système de visualisation, conformément à l'invention,
la figure 5, un schéma illustrant un premier exemple de réalisation d'un second mode de fonctionnement de l'invention, et
la figure 6, un schéma illustrant un second exemple de réalisation du second mode de fonctionnement de l'invention.

Les éléments présents dans plusieurs figures distinctes sont affectés d'une seule et même référence.

L'invention concerne donc un système de visualisation multifonction bipilote comportant au moins trois écrans. Un tel système de visualisation peut usuellement comporter également des boutons et/ou des dalles tactiles agencées en superposition des écrans....

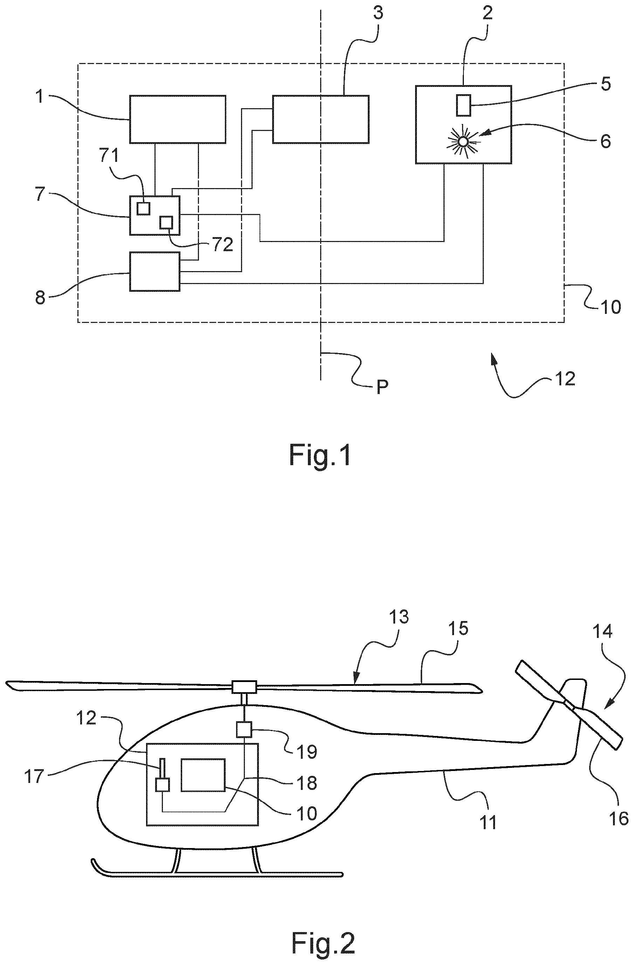

Tel que représenté à la figure 1, le système 10 comporte ainsi un écran droit 2 agencé en regard d'un premier pilote lorsque ce premier pilote regarde droit devant lui selon une direction inscrite dans un plan médian passant par le premier pilote, un écran gauche 1 agencé en regard d'un second pilote lorsque ce second pilote regarde droit devant lui selon une direction inscrite dans un plan médian passant par le second pilote et un écran central 3 agencé entre le premier pilote et le second pilote.

Le premier pilote et le second pilote sont en outre assis côte à côte dans un cockpit 12 d'aéronef de part et d'autre d'un plan antéropostérieur P.

Tel que représenté à la figure 2, le système 10 est alors agencé à l'intérieur du cockpit 12 d'un aéronef 11 tel un hélicoptère conventionnel comportant un rotor de sustentation 13 et un rotor arrière 14. En outre, l'invention ne se limite pas à ce seul type d'aéronef 11 et peut aussi désigner un avion ou encore un hélicoptère hybride muni d'une aile participant à la sustentation et d'au moins une hélice participant à la propulsion.

Un tel aéronef 11 est avantageusement un hélicoptère à commandes de vol mécaniques ou à commandes de vol électriques comportant au moins un organe de commande 17, tel un manche et/ou un levier, manœuvré par un pilote, au moins une liaison mécanique ou électrique 18 s'étendant entre l'organe de commande 17 et un actionneur 19 permettant de commander le pas des pales 15 du rotor de sustentation 13. Ces commandes de vol peuvent également comporter un autre organe de commande, tel un palonnier, une autre liaison mécanique et un autre actionneur permettant de modifier le pas des pales 16 du rotor arrière 14.

Les écrans 1, 2, 3 sont tous aptes à afficher une page de symbologies dite << page FND >> comportant des symboles 5, tels un cadran, une règle, une échelle et/ou des repères, et des informations 6 prédéterminées telles un indexe se déplaçant sur un cadran ou sur une règle, ces informations 6 étant variables dans le temps et représentatives d'une valeur de cap ou d'altitude se rapportant au vol et à la navigation d'un aéronef.

Par ailleurs, un tel système 10 comporte des détecteurs 7 pour détecter qu'au moins un des écrans 1, 2, 3 est en panne.

De tels détecteurs 7 sont alors reliés par voie filaire ou non filaire à chaque écran 1, 2, 3 pour identifier s'ils sont en panne ou valides. Alternativement et selon une autre variante non représentée, les détecteurs 7 peuvent être en tout ou partie intégrés à chaque écran 1, 2, 3.

Ces détecteurs 7 peuvent notamment comporter des senseurs 71 mesurant au moins une grandeur physique telle une tension électrique ou un courant électrique et une unité de traitement 72 permettant d'analyser cette grandeur physique, voire de la comparer avec au moins une valeur de seuil prédéterminées.

L'écran droit 2 peut être considéré comme étant un écran prioritaire lorsqu'il affiche la page FND sans possibilité pour les pilotes de l'effacer. Un tel agencement est généralement le cas lorsque le premier pilote est préférentiellement le pilote et le second pilote est préférentiellement le copilote de l'aéronef.

En cas de panne détectée sur cet écran droit 2, dit prioritaire, affichant la page FND, un contrôleur 8 identifie un écran valide 1 parmi les autres écrans 1 et 3 et bascule alors automatiquement l'affichage de la page FND sur cet écran valide 1.

Le système de visualisation 10 permet alors d'affecter à cet écran valide 1 l'affichage de la page FND sans possibilité pour l'équipage de supprimer cette page FND de cet écran valide 1.

Par ailleurs, les écrans 1, 2, 3 peuvent être connectés entre eux et sont connectés avec le contrôleur 8 par des liaisons filaires ou non filaires pour transmettre leur état valide ou en panne au contrôleur 8. Dans ce cas, chaque écran 1, 2, 3 peut également comporter tout ou partie des senseurs 71 et de l'unité de traitement 72 des détecteurs 7.

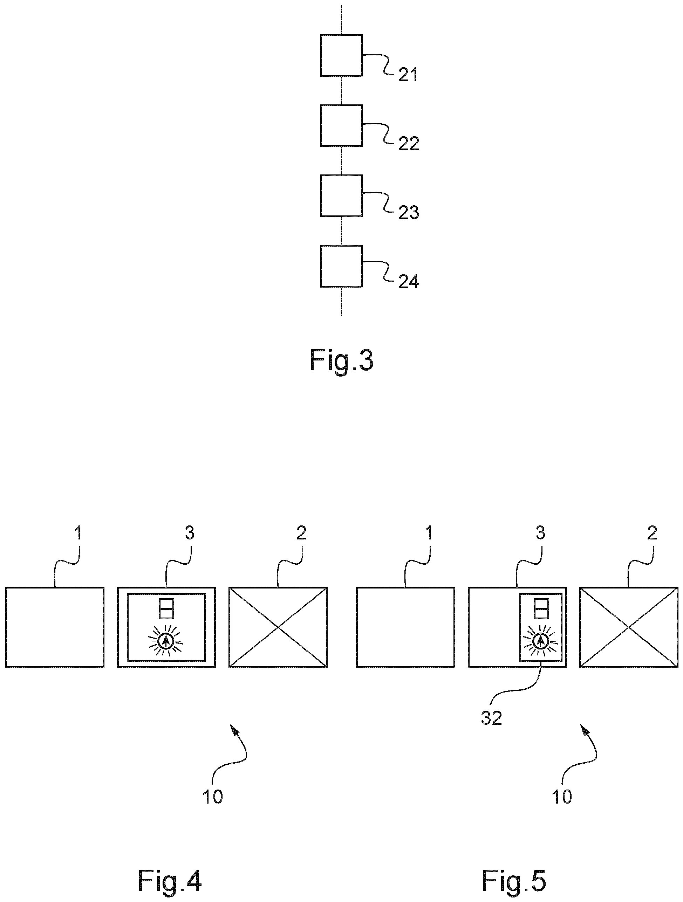

Tel que représenté à la figure 3, le procédé 20 de visualisation multifonction bipilote d'un aéronef 11 comporte une étape de génération 21 d'une page FND munie de symboles 5 et d'informations 6 prédéterminés se rapportant au vol et à la navigation de l'aéronef 11. Une telle page FND est générée de manière récursive au moyen d'images affichées un nombre indéfini de fois par l'application de règles, de calculs et/ou de mesures correspondant par exemple à la position de l'aéronef par rapport à un référentiel tel que le référentiel terrestre. La page FND ainsi générée évolue en temps réel en fonction, par exemple, de paramètres tels que l'altitude et le cap suivi par l'aéronef 11.

Le procédé 20 comporte alors un affichage 22 de cette page FND sur un écran prioritaire 1 ou 2 choisi parmi au moins un des écrans 1, 2, 3. Lors de cet affichage 22, la page FND ne peut pas être effacée de l'écran prioritaire 1 ou 2 par un premier pilote et un second pilote.

Une étape de surveillance 23 est alors mise en œuvre par les détecteurs 7 précédemment décrits pour détecter que l'écran prioritaire 1 ou 2 est valide ou en panne.

A l'étape de surveillance 23, si les détecteurs 7 détectent une panne de l'écran prioritaire 1 ou 2, le procédé 20 comporte alors une étape de reconfiguration automatique 24 mise en œuvre par le contrôleur 8 pour afficher automatiquement la page FND sur un écran valide 1, 2, 3 sans possibilité pour le premier pilote et le second pilote d'effacer la page FND sur l'écran valide 1, 2, 3. Le contrôleur 8 est ainsi en mesure d'afficher la page FND sur l'un des écrans 1, 2, 3 restants valides tout en interdisant à l'équipage de supprimer ultérieurement cette page FND nouvelle affichée.

En outre, tel que représenté aux figures 4 et 5, l'écran prioritaire 1 ou 2 peut être l'écran droit 2.

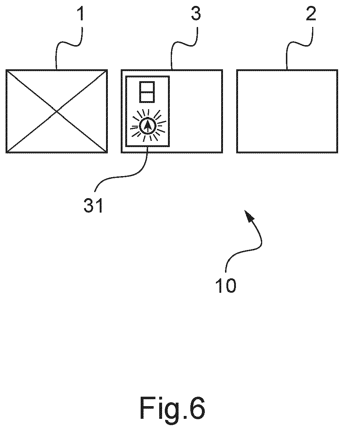

Alternativement, tel que représenté à la figure 6, l'écran prioritaire 1 ou 2 peut être l'écran gauche 1.

Par ailleurs selon un premier mode de fonctionnement, le système 10 peut être configuré pour afficher la page FND sur la totalité de l'écran prioritaire 2. Ainsi tel que représenté à la figure 4, en cas de panne de cet écran prioritaire 2 détectée par les détecteurs 7, le contrôleur 8 est configuré pour afficher la page FND sur toute la surface de l'écran valide 3.

Selon un second mode de fonctionnement, le système 10 peut être configuré pour afficher la page FND sur une portion de l'écran prioritaire 1 ou 2.

Ainsi, selon un premier exemple de ce second mode de fonctionnement représenté à la figure 5, en cas de panne de l'écran prioritaire 2 détectée par les détecteurs 7, le contrôleur 8 est configuré pour afficher la page FND sur une partie droite 32 de la surface de l'écran valide 3.

Selon un second exemple de ce second mode de fonctionnement représenté à la figure 6, en cas de panne de l'écran prioritaire 1 détectée par les détecteurs 7, le contrôleur 8 est configuré pour afficher la page FND sur une partie gauche 31 de la surface de l'écran valide 3.

Eventuellement, la page FND, et d'autres pages, peuvent être affichées sur des écrans considérés comme non prioritaires.

Par suite, la page FND peut sur ces écrans non prioritaires être effacée et, en cas de panne de l'un de ces écrans, le contrôleur 8 peut être configuré pour afficher cette page FND sur un écran valide avec possibilité pour l'équipage de l'effacer de l'écran valide.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Système (10) de visualisation multifonction bipilote comportant :
• au moins trois écrans (1, 2, 3), au moins deux desdits au moins trois écrans (1, 2, 3) étant aptes à afficher une page de symbologies dite « page FND » comportant des symboles (5) et des informations (6) prédéterminés se rapportant au vol et à la navigation d'un aéronef (11), et
• des détecteurs (7) pour détecter au moins un écran (1, 2, 3) en panne parmi lesdits au moins trois écrans (1, 2, 3),
**caractérisé en ce que**, hors cas de panne d'au moins un desdits au moins trois écrans (1, 2, 3), ladite page FND est affichée au moins sur un écran prioritaire (1, 2) parmi lesdits au moins trois écrans (1, 2, 3) sans possibilité pour un premier pilote et un second pilote d'effacer ladite page FND, et **en ce que** ledit système (10) de visualisation comporte un contrôleur (8) configuré pour, en cas de panne dudit écran prioritaire (1, 2) détectée par lesdits détecteurs (7), afficher automatiquement ladite page FND sur un écran valide (1, 2, 3) desdits au moins trois écrans (1, 2, 3) sans possibilité pour ledit premier pilote et ledit second pilote d'effacer ladite page FND sur ledit écran valide (1, 2, 3).

2. Système selon la revendication 1,
**caractérisé en ce que** les au moins trois écrans (1, 2, 3) comprenant un écran droit (2) agencé en regard dudit premier pilote, un écran gauche (1) agencé en regard dudit second pilote et un écran central (3) agencé entre ledit premier pilote et ledit second pilote, ledit premier pilote et ledit second pilote étant assis côte à côte dans un cockpit (12) d'aéronef, ledit écran prioritaire (1, 2) est choisi parmi le groupe comportant ledit écran gauche (1) et ledit écran droit (2).

3. Système selon la revendication 2,
**caractérisé en ce que** ledit écran prioritaire (1, 2) est ledit écran droit (2).

4. Système selon la revendication 2,
**caractérisé en ce que** ledit écran prioritaire (1, 2) est ledit écran gauche (1).

5. Système selon l'une quelconque des revendications 1 à 4,
**caractérisé en ce que**, hors cas de panne d'au moins un desdits au moins trois écrans (1, 2, 3), ledit système (10) est configuré pour afficher ladite page FND sur la totalité dudit écran prioritaire (1, 2) et, en cas de panne dudit écran prioritaire (1, 2) détectée par lesdits détecteurs (7), ledit contrôleur (8) est configuré pour afficher ladite page FND sur la totalité dudit écran valide (1, 2, 3).

6. Système selon l'une quelconque des revendications 1 à 4,
**caractérisé en ce que**, hors cas de panne d'au moins un desdits au moins trois écrans (1, 2, 3), ledit système (10) est configuré pour afficher ladite page FND sur une portion dudit écran prioritaire (1, 2) et, en cas de panne dudit écran prioritaire (1, 2) détectée par lesdits détecteurs (7), ledit contrôleur (8) est configuré pour afficher ladite page FND sur une partie (31, 32) dudit écran valide (1, 2, 3).

7. Système selon la revendication 6,
**caractérisé en ce que** les au moins trois écrans (1, 2, 3) comprenant un écran droit (2) agencé en regard d'un premier pilote, un écran gauche (1) agencé en regard d'un second pilote et un écran central (3) agencé entre ledit premier pilote et ledit second pilote, ledit premier pilote et ledit second pilote étant assis côte à côte dans un cockpit (12) d'aéronef, ledit écran prioritaire (1, 2) étant ledit écran droit (2), en cas de panne dudit écran prioritaire (1, 2) détectée par lesdits détecteurs (7), ledit contrôleur (8) est configuré pour afficher ladite page FND sur une partie droite (32) dudit écran valide (1, 2, 3).

8. Système selon la revendication 6,
**caractérisé en ce que** les au moins trois écrans (1, 2, 3) comprenant un écran droit (2) agencé en regard d'un premier pilote, un écran gauche (1) agencé en regard d'un second pilote et un écran central (3) agencé entre ledit premier pilote et ledit second pilote, ledit premier pilote et ledit second pilote étant assis côte à côte dans un cockpit (12) d'aéronef, ledit écran prioritaire (1, 2) étant ledit écran gauche (1), en cas de panne dudit écran prioritaire (1, 2) détectée par lesdits détecteurs (7), ledit contrôleur (8) est configuré pour afficher ladite page FND sur une partie gauche (31) dudit écran valide (1, 2, 3).

9. Aéronef (11) comportant un cockpit (12) apte à recevoir un premier pilote et un second pilote assis l'un à côté de l'autre de part et d'autre d'un plan antéropostérieur (P) de l'aéronef,
**caractérisé en ce que** ledit aéronef (11) comporte un système (10) de visualisation multifonction bipilote selon l'une des revendications 1 à 8.

10. Procédé (20) de visualisation multifonction bipilote d'un aéronef (11) comportant les étapes de :
• génération (21) d'une page de symbologies dite << page FND » comportant des symboles et des informations prédéterminés se rapportant au vol et à la navigation dudit aéronef (11), et
• surveillance (23) d'au moins trois écrans (1, 2, 3) pour détecter au moins un écran (1, 2, 3) en panne parmi lesdits au moins trois écrans (1, 2, 3),
**caractérisé en ce que**, hors cas de panne d'au moins un desdits au moins trois écrans (1, 2, 3), ledit procédé (20) comporte un affichage (22) de ladite page FND sur un écran prioritaire (1, 2) parmi lesdits au moins trois écrans (1, 2, 3) sans possibilité pour un premier pilote et un second pilote d'effacer ladite page FND, et **en ce que**, en cas de panne dudit écran prioritaire (1, 2) détectée lors de ladite surveillance (23), ledit procédé (20) comporte une reconfiguration automatique (24) avec un contrôleur (8) pour afficher automatiquement ladite page FND sur un écran valide (1, 2, 3) desdits au moins trois écrans (1, 2, 3) sans possibilité pour ledit premier pilote et ledit second pilote d'effacer ladite page FND sur ledit écran valide (1, 2, 3).
